(19) Europäisches Patentamt / European Patent Office / Office européen des brevets

(11) **EP 2 518 582 B1**

(12) **FASCICULE DE BREVET EUROPEEN**

(45) Date de publication et mention
de la délivrance du brevet:
**12.03.2014 Bulletin 2014/11**

(51) Int Cl.:
**G05D 13/46** (2006.01)     **G05D 1/08** (2006.01)

(21) Numéro de dépôt: **12002409.6**

(22) Date de dépôt: **03.04.2012**

(54) **Passage d'un état de non synchronisation à un état de synchronisation entre un moteur et un rotor**

Übergang von einem Nichtsynchronisierungszustand in einen Synchronisierungszustand zwischen einem Motor und einem Rotor

Passage from a state of non-synchronisation to a state of synchronisation between a motor and a rotor

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2011 FR 1101327**

(43) Date de publication de la demande:
**31.10.2012 Bulletin 2012/44**

(73) Titulaire: **Airbus Helicopters
13725 Marignane Cedex (FR)**

(72) Inventeur: **Rossotto, Régis
13012 Marseille (FR)**

(74) Mandataire: **GPI & Associés
EuroParc de Pichaury
Bâtiment B2 - 1er Etage
1330 Rue Guillibert de la Lauzière
13856 Aix en Provence Cedex 3 (FR)**

(56) Documents cités:
**EP-A2- 0 398 839**

**Description**

La présente demande est issue de la demande FR1101327 déposée le 29 avril 2011, dont la teneur est reprise dans son ensemble.

L'invention se rapporte au domaine technique général de la régulation des moteurs d'un aéronef, notamment d'un aéronef à voilure tournante.

Ce type d'aéronef comporte en général au moins un rotor principal de sustentation voire de propulsion muni d'une pluralité de pales à pas variable, et au moins une source motrice de type moteur entraînant en rotation le rotor principal par le biais d'une boîte de transmission de puissance principale connue sous l'acronyme BTP.

Un tel moteur peut être un turbomoteur à turbine libre comportant un générateur de gaz à la suite duquel est agencée au moins une turbine libre solidaire d'un arbre de sortie du turbomoteur, l'arbre de sortie étant apte à mettre en mouvement la boîte de transmission de puissance d'un aéronef.

De plus, une roue libre par moteur est généralement agencée entre un moteur et la boîte de transmission de puissance pour notamment empêcher qu'un blocage mécanique du moteur entraîne un blocage de la boîte de transmission de puissance et par suite un blocage du rotor principal de la voilure tournante.

Classiquement, la roue libre comprend ainsi une partie menante apte à mettre en rotation une partie menée de cette roue libre. La partie menante de la roue libre est alors reliée au moteur alors que la partie menée de la roue libre est reliée à la boîte de transmission de puissance.

On entend par « synchronisation », un premier état de fonctionnement dans lequel le moteur entraîne la voilure tournante, la partie menante de la roue libre engrenant la partie menée de cette roue libre.

A l'inverse, on entend par « désynchronisation », un deuxième état de fonctionnement dans lequel le moteur n'entraîne pas la voilure tournante, la partie menante de la roue libre n'engrenant pas la partie menée de cette roue libre.

Selon un autre aspect, le moteur est équipé d'un système de régulation qui a pour fonction principale de piloter, via le débit carburant, la puissance délivrée par ce moteur. Ce système de régulation peut avoir pour objectif de maintenir la vitesse de rotation du rotor principal d'un hélicoptère à une valeur sensiblement constante, en maintenant la vitesse de rotation d'un générateur de gaz du moteur en dessous de seuil prédéterminé par exemple.

En effet, un hélicoptère est notamment piloté en agissant sur le pas des pales du rotor principal.

Une augmentation de ce pas tend à entraîner une décélération du rotor principal, l'augmentation du pas entraînant une augmentation de la portance du rotor principal mais aussi de la traînée aérodynamique de ce rotor principal. Pour éviter que la vitesse de rotation ne soit réduite indument, la puissance générée par le moteur doit alors augmenter de manière à maintenir la vitesse de rotation du rotor principal à la valeur désirée. De la même façon, lors de la baisse du pas des pales, il faut diminuer la puissance délivrée par le moteur pour que la vitesse de rotation du rotor principal ne dépasse pas la limite fixée par le constructeur.

De plus, la régulation du débit carburant doit être scrupuleusement contrôlée, l'augmentation du débit carburant devant être contrôlée pour notamment permettre une augmentation de la puissance absorbée par la voilure tournante sans risque de pompage pour le moteur. Ce pompage est un phénomène qui affecte le générateur de gaz des moteurs lorsque localement, l'incidence trop élevée d'une aube ou d'un redresseur provoque un décrochage aérodynamique qui réduit considérablement le débit d'air. Une conséquence de ce phénomène est une surchauffe dans la chambre de combustion du moteur pouvant être à l'origine de la détérioration d'une turbine du moteur.

De même, la décélération du moteur et la diminution du débit carburant doit aussi être contrôlée pour éviter une extinction du moteur.

Sur un hélicoptère par exemple, il existe différents types de régulation dont le but est de constamment ramener une vitesse de rotation de la turbine libre vers une première valeur de consigne prédéfinie.

Une des régulations connues est la régulation proportionnelle intégrale avec une anticipation de puissance basée sur le pas collectif des pales du rotor principal. Ce type de régulation vise à maintenir la vitesse de rotation de la turbine libre sensiblement égale à la première valeur de consigne de régulation. Dès lors, un calculateur utilise les informations de capteurs de vitesse de rotation de la turbine libre.

Par exemple, des capteurs mesurent la première vitesse de rotation NTL de la turbine libre du moteur. Dès lors, une première valeur de consigne, correspondant à la valeur que doit avoir la première vitesse de rotation NTL pour que la vitesse de rotation du rotor soit idéale, est fixée par le constructeur.

De ce fait, si la première vitesse de rotation NTL est différente de cette première valeur de consigne, le calculateur accélère ou décélère le moteur pour obtenir la vitesse de rotation idéale du rotor principal.

Dans ces conditions, le calculateur détermine une deuxième valeur de consigne en faisant appel à des lois d'anticipation basées sur le pas collectif des pales du rotor principal. Cette deuxième consigne correspond à la valeur que doit atteindre la deuxième vitesse de rotation NG du générateur de gaz du moteur pour que la première vitesse de rotation NTL soit égale à la première valeur de consigne.

On se référera à la littérature pour obtenir des informations relatives à la régulation proportionnelle intégrale avec une anticipation de puissance.

La présente invention concerne plus particulièrement la régulation transitoire d'un tel moteur en cas de manoeuvre sévère du pilote, c'est-à-dire en cas d'une variation rapide et substantielle du pas collectif des pales.

En effet, suite à une baisse importante et rapide du pas collectif, la vitesse de rotation de la voilure tournante augmente sensiblement. Dès lors, le moteur et la boîte de transmission de puissance se désynchronisent durant une période transitoire appelée autorotation, la vitesse de rotation de la partie menante de la roue libre correspondante devenant inférieure à la vitesse de rotation de la partie menée de cette roue libre.

Par contre, lorsque le pilote augmente à nouveau le pas collectif, l'anticipation de puissance permet d'accélérer le moteur pour répondre le plus efficacement possible au besoin de puissance du rotor principal.

A l'inverse, la troisième vitesse de rotation NR du rotor principal chute rapidement suite à l'augmentation du pas collectif, entraînant une augmentation de traînée dudit rotor principal.

Par suite, la vitesse de rotation de la partie menante de la roue libre agencée entre le moteur et la boîte de transmission de puissance augmente, alors qu'au contraire la vitesse de rotation de la partie menée de cette roue libre chute.

Le premier état de fonctionnement correspondant à un fonctionnement synchronisé est finalement atteint lorsque la partie menée engrène la partie menante. L'hélicoptère sort alors de la phase de vol d'autorotation.

Néanmoins, la resynchronisation est brutale. La roue libre subit un choc au moment de la resynchronisation, lié à la différence d'accélération entre le rotor principal et la turbine libre du moteur.

Par ailleurs, on note que la troisième vitesse de rotation de la voilure tournante descend en dessous de sa valeur nominale pendant la durée nécessaire au moteur pour retrouver une puissance suffisante afin d'entraîner la voilure tournante.

Parmi les régulations connues, citons quelques documents.

Le document EP0093684, décrit l'utilisation de la différence entre la vitesse de rotation du rotor principal et la vitesse de rotation de la turbine libre pour déterminer un état d'autorotation. Lors d'une telle autorotation, on utilise la décélération du rotor principal pour commander le débit de carburant du moteur.

Le document US5046923 décrit par exemple une régulation se basant sur un algorithme prenant en compte la vitesse de rotation du rotor principal, la vitesse de rotation du moteur et le cas échéant le couple moteur pour déterminer l'état d'autorotation. Une fois l'état mentionné ci-dessus d'autorotation reconnu, on calcule une consigne de régime de rotation du générateur de gaz du moteur et une consigne de débit de carburant.

Le document EP0398839 décrit un contrôle automatique de l'alimentation en carburant d'un moteur d'hélicoptère à turbine libre. En comparant la vitesse du rotor principal à la vitesse de la turbine libre, diverses consignes sont appliquées. La prise en compte de l'accélération du rotor sert à commander une consigne d'anticipation de NG (vitesse de rotation du générateur de gaz). L'utilisation supplémentaire possible du couple en sortie du moteur est évoquée. De fait, ce document ne permet pas d'assurer une régulation de la vitesse de rotation de la turbine libre du moteur, en cas de manoeuvre sévère du pilotage, i.e. en cas de variation rapide et substantielle du pas collectif des pales du rotor principal:

- en évitant une resynchronisation brutale et un choc important au niveau de la roue libre, et

- en assurant une reprise de puissance plus efficace, d'où une moindre chute de vitesse de rotation (NR) de la voilure tournante et donc un aéronef plus réactif.

L'invention est définie par les revendications, dont le préambule est reflété par le document EP0398839. Ses objets sont un procédé de régulation et un dispositif associé, pour au moins un moteur d'aéronef pour diminuer les chocs dans la roue libre lors de la resynchronisation du moteur et de la boîte de transmission principale.

Les objets assignés à l'invention sont atteints à l'aide d'un procédé de régulation d'une source motrice munie d'un générateur de gaz et d'une turbine libre d'un aéronef à voilure tournante consistant à :

- utiliser la valeur mesurée de la première vitesse de rotation de la turbine libre pour faire tendre cette première vitesse de rotation vers une première valeur de consigne en pilotant une deuxième vitesse de rotation dudit générateur de gaz par le biais d'une deuxième valeur consigne,

- lire l'évolution de la position du pas collectif des pales de la voilure tournante et en fonction de ladite évolution, anticiper temporairement la demande en puissance de la voilure tournante en corrigeant la deuxième valeur de consigne.

L'état de la technique consiste parfois à utiliser une première valeur de consigne prédéterminée par le constructeur. A l'inverse, le procédé selon l'invention est notamment remarquable en ce qu'il consiste à :

- lire la valeur courante de la troisième vitesse de rotation NR de la voilure tournante, à l'aide d'un premier moyen de mesure fournissant ladite valeur courante à un calculateur selon une période régulière par exemple,

- calculer un terme de régulation, fonction de la troisième vitesse de rotation à l'aide de la relation :

$$NRc = NR * (1 - d)$$

où « NRc » représente ledit terme de régulation, « NR » représente ladite troisième vitesse de rotation, « d » représente une constante non nulle comprise entre 0,005 et 1, « * » représente le signe de la multiplication et « - » le signe de la soustraction,

- comparer les valeurs de ce terme de régulation et d'un seuil de consigne prédéterminé de la première vitesse de rotation de la turbine libre,

- effectuer la régulation de la vitesse de la turbine libre sur une première valeur de consigne égale soit audit terme de régulation soit audit seuil de consigne en fonction de conditions prédéterminées.

On constate alors que la régulation de la première vitesse de rotation de la turbine libre est réalisée soit à l'aide d'un seuil de consigne, correspondant par exemple à la consigne utilisée dans certaines méthodes de l'état de la technique, soit à l'aide du terme de régulation fonction de la troisième vitesse de rotation NR.

Plus précisément, lorsque la source motrice entraîne un rotor principal via une roue libre, durant un premier état de fonctionnement pour lequel la source motrice et le rotor principal sont synchronisés, on utilise le seuil de consigne. A l'inverse, lorsque la source motrice n'entraîne plus un rotor principal durant un deuxième état de fonctionnement, on utilise le terme de régulation.

Selon un exemple de mise en oeuvre conforme à l'invention, le procédé consiste à utiliser une constante d de préférence comprise entre 0.005 et 0.1, et plus préférentiellement égale à 0.01.

Selon un premier mode de réalisation préféré, on effectue la régulation de la vitesse de la turbine libre sur une première valeur de consigne égale au terme de régulation lorsque ce terme de régulation est supérieur au seuil de consigne, et l'on effectue la régulation de la vitesse de la turbine libre sur une première valeur de consigne égale au seuil de consigne lorsque ce seuil de consigne est supérieur audit terme de régulation.

On constate qu'il n'est pas nécessaire de déterminer si l'aéronef fonctionne selon le premier ou le deuxième état de fonctionnement.

Selon un deuxième mode de réalisation, si la troisième vitesse de rotation est inférieure à la somme de la première vitesse de rotation de la turbine libre et d'un premier invariant prédéterminé, et si la dérivée par rapport au temps de la troisième vitesse de rotation est supérieure à un deuxième invariant alors on effectue la régulation de la vitesse de la turbine libre sur une première valeur de consigne égale audit terme de régulation, ladite régulation étant dans les autres cas effectuée sur la base du seuil de consigne.

Le premier et le deuxième invariants sont déterminés par le constructeur, par essais notamment. Ce premier et deuxième invariants dépendent notamment de l'inertie du rotor principal et de la capacité d'accélération de la source motrice.

Selon un exemple de mise en oeuvre conforme à l'invention, la valeur de consigne de la deuxième vitesse de rotation du générateur de gaz de la source motrice est déterminée par l'intermédiaire d'une régulation proportionnelle intégrale.

Selon un exemple de mise en oeuvre conforme à l'invention, le procédé consiste à utiliser un calculateur de la source motrice pour mettre en oeuvre ses étapes constitutives.

Selon un exemple de mise en oeuvre conforme à l'invention, le procédé consiste à utiliser un calculateur du système avionique de l'aéronef.

Le procédé conforme à l'invention trouve son application par exemple sur un aéronef, du genre giravion ou hélicoptère, dont la source motrice est reliée à la voilure tournante via une boîte de transmission de puissance principale et un mécanisme à roue libre. La source motrice comporte un ou plusieurs moteurs.

Un avantage du procédé conforme à l'invention réside dans le fait qu'il permet de diminuer les chocs subis notamment par une roue libre de la chaîne de transmission lors de la resynchronisation du moteur et de la boîte de transmission principale au cours de manoeuvres sévères de la part du pilote. De tels chocs étaient générés au moment du réembrayage de la boîte de transmission principale avec les régulations classique connues. Ces chocs peuvent conduire à un vieillissement prématuré d'un certain nombre de pièces mécaniques.

Un autre avantage du procédé conforme à l'invention réside dans une décélération du rotor principal moins marquée lors de manoeuvres sévères par rapport à l'état de la technique. L'aéronef, par exemple un hélicoptère, est donc plus réactif par rapport à l'état de la technique.

Le procédé conforme à l'invention permet d'optimiser la reprise de puissance en sortie d'une phase d'autorotation sans qu'il soit nécessaire de détecter ni le passage en autorotation, ni la fin de l'autorotation. Le procédé conforme à l'invention permet ainsi de fournir une loi de consigne de turbine libre valable quel que soit l'état de l'aéronef (en autorotation ou non).

Outre un procédé, l'invention vise un dispositif de régulation d'une source motrice d'un aéronef à voilure tournante, cette source motrice étant munie d'un générateur de gaz et d'une turbine libre, le dispositif comprenant un calculateur pourvu d'un processeur et d'une mémoire contenant des instructions, ces instructions permettant au processeur de réaliser les opérations suivantes :

- utiliser une valeur mesurée de la première vitesse de rotation pour faire tendre cette première vitesse de rotation vers une première valeur de consigne en pilotant une deuxième vitesse de rotation dudit générateur de gaz par le biais d'une deuxième valeur consigne,

- déterminer l'évolution du pas collectif des pales de la voilure tournante, et en fonction de ladite évolution, le processeur anticipe temporairement la demande en puissance de la voilure tournante en corrigeant la deuxième valeur de consigne.

De plus :

- le processeur détermine la valeur courante de la troisième vitesse de rotation de la voilure tournante,

- le processeur calcule un terme de régulation fonction de la troisième vitesse de rotation à l'aide de la relation :

$$NRc = NR * (1 - d)$$

où « NRc » représente ledit terme de régulation, « NR » représente ladite troisième vitesse de rotation, « d » représente une constante non nulle comprise entre 0,005 et 1,

- le processeur compare les valeurs de ce terme de régulation et d'un seuil de consigne prédéterminée de la première vitesse de rotation de la turbine libre,

- le processeur effectue la régulation de la vitesse de la turbine libre sur une première valeur de consigne égale soit audit terme de régulation soit audit seuil de consigne en fonction de conditions prédéterminées.

L'invention et ses avantages apparaîtront avec plus de détails dans le cadre de la description qui suit avec un exemple de réalisation donné à titre illustratif et non limitatif, en référence aux figures annexées qui représentent :

- la figure 1, une illustration schématique d'un exemple de réalisation d'une liaison mécanique entre un rotor et un moteur pour laquelle est mis en oeuvre le procédé conforme à l'invention,

- la figure 2, une illustration d'un exemple d'évolution des vitesses de rotation d'un rotor et d'une turbine libre selon l'état de la technique,

- la figure 3, une illustration d'un exemple d'évolution des vitesses de rotation d'un rotor et d'une turbine libre selon le procédé conforme à l'invention, en fonction d'une modification du pas collectif,

- et la figure 4, un agrandissement d'une partie des graphiques des figures 2 et 3.

Les éléments fonctionnellement et structurellement identiques, présents dans plusieurs figures distinctes, sont affectés d'une seule et même référence numérique ou alphanumérique.

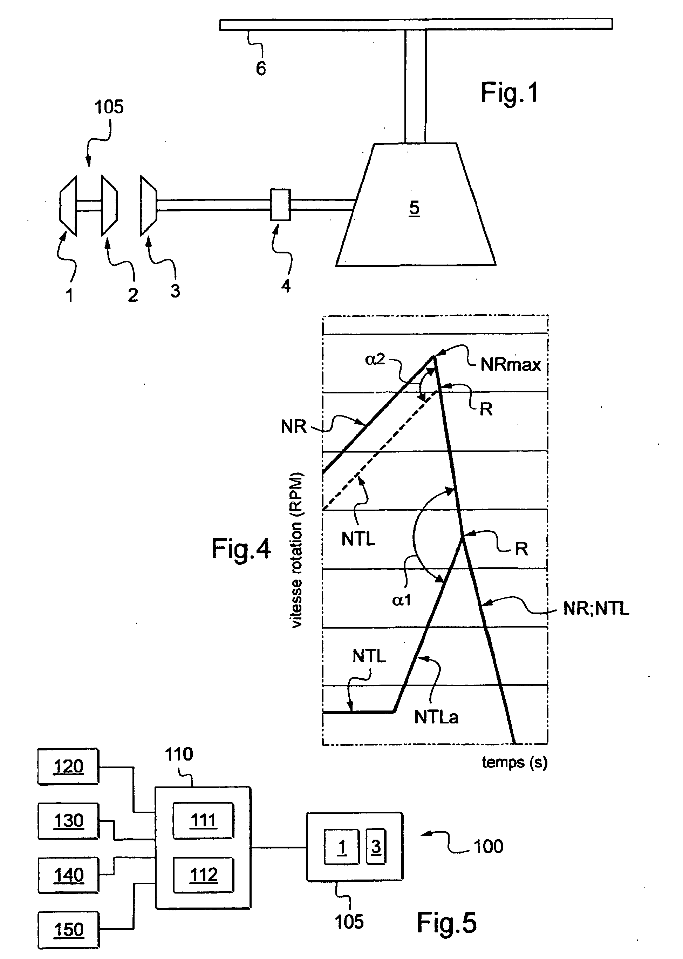

La figure 1a est une représentation schématique d'une chaîne de transmission mécanique d'un hélicoptère sur lequel est appliqué le procédé conforme à l'invention.

La chaîne de transmission comporte une source motrice 105 munie notamment d'un générateur de gaz comprenant un compresseur 1 et une turbine haute pression 2, dite aussi turbine liée.

Un flux de gaz émis par la turbine haute pression 2 met en rotation la turbine libre 3 de la source motrice. Ainsi, la turbine libre 3 effectue un mouvement rotatif à une première vitesse de rotation NTL, le générateur de gaz et notamment son compresseur effectuant un mouvement rotatif a une deuxième vitesse de rotation NG.

En outre, cette turbine libre 3 est reliée via un mécanisme à roue libre 4, appelé simplement roue libre 4, à une boîte de transmission de puissance principale 5.

La boîte de transmission principale 5 entraîne en rotation une voilure tournante à une troisième vitesse de rotation NR, la voilure tournante étant pourvue d'une voilure tournante formant rotor principal 6 de sustentation comprenant une pluralité de pales.

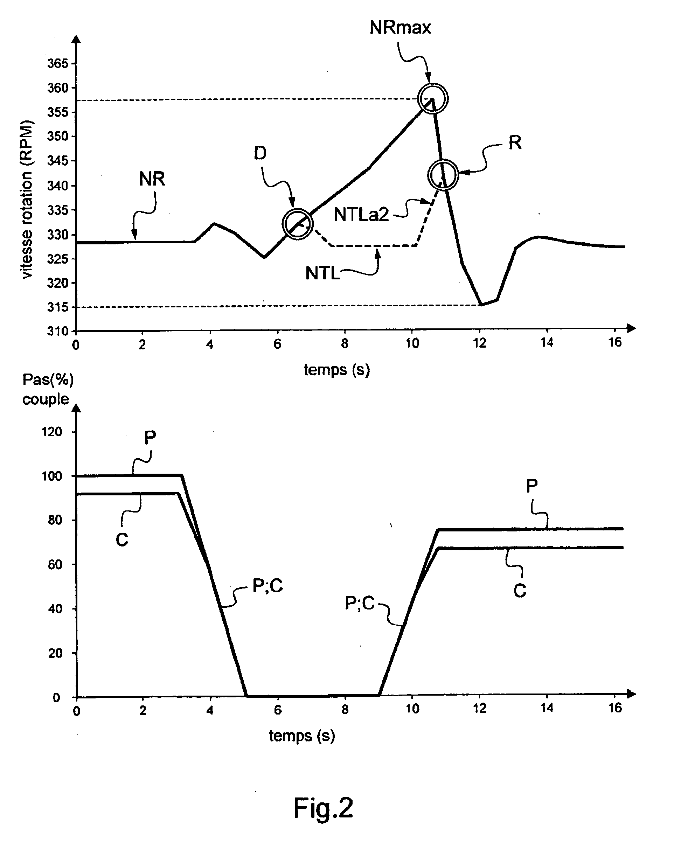

La figure 2 est une illustration d'un exemple d'évolution selon l'art antérieur connu, de la troisième vitesse de rotation NR du rotor principal 6 et de la première vitesse de rotation NTL de la turbine libre 3, en fonction d'une variation du pas collectif P des pales de la voilure tournante. La modification de ce pas collectif P des pales de la voilure tournante est représentée dans le temps au graphique du bas. Il en est de même pour le couple transmis C.

Le graphique du haut de la figure 2 montre un point D correspondant à l'instant où le rotor principal 6 et la turbine libre 3 se désynchronisent consécutivement à une chute rapide et substantielle du pas collectif P des pales de la voilure tournante. Durant la phase de désynchronisation, un calculateur effectue une régulation de la première vitesse rotation NTL à partir d'une consigne prédéterminée.

La troisième vitesse de rotation NR du rotor principal augmente jusqu'à une valeur maximale illustrée par le point NRmax avant de chuter à nouveau. L'anticipation en puissance du rotor principal 6 est matérialisée par une augmentation transitoire importante de la première vitesse de rotation NTL. Cette anticipation est montrée par la portion NTLa vers la fin de la phase de désynchronisation.

Lorsqu'une partie menée de la roue libre 4 reliée à la turbine libre effectue une rotation à la même vitesse qu'une partie menante de cette roue libre 4 reliée à la boîte de transmission de puissance 5, le rotor principal 6 et la turbine libre 3 redeviennent synchrones. Le passage d'un deuxième état de fonctionnement désynchronisé vers un premier état de fonctionnement synchronisé génère notamment un à-coup dans la roue libre 4. La resynchronisation se produit au point R des courbes de vitesses.

Après la resynchronisation, le moteur doit contrer la résistance aérodynamique ainsi que l'inertie du rotor principal 6 resynchronisé. Il en résulte alors une chute transitoire de la troisième vitesse de rotation NR, par exemple d'une valeur nominale de 328 tours par minute à une valeur de 315 tours par minute. La troisième vitesse de rotation NR tend ensuite à remonter et à se stabiliser à nouveau sur la valeur nominale.

Le graphique du bas montre par exemple une modification du pas collectif P des pales de la voilure tournante passant rapidement d'une position de 100% à une position de 0%, appelées respectivement « plein grand pas » et « plein petit pas ».

Selon un exemple de mise en oeuvre, le procédé de régulation d'une source motrice d'un aéronef à voilure tournante, conforme à l'invention, consiste à utiliser la valeur mesurée de la première vitesse de rotation NTL de la turbine libre pour piloter la deuxième vitesse de rotation NG à l'aide d'une deuxième consigne, de manière à réguler la première vitesse de rotation de la turbine libre NTL sur une valeur de consigne prédéfinie NTL*.

Le procédé consiste ensuite à lire l'évolution de la position du pas collectif P des pales de la voilure tournante et en fonction de l'ampleur de ladite évolution, anticiper temporairement la demande en puissance de la voilure tournante en corrigeant la valeur de consigne de la vitesse de rotation de la source motrice NG*.

Selon le procédé conforme à l'invention, on lit la valeur courante de la vitesse de rotation du rotor principal 6 de la voilure tournante.

Dès lors, on calcule un terme de régulation NRc fonction de la troisième vitesse de rotation NR à l'aide de la relation :

$$NRc = NR * (1 - d)$$

où « NRc » représente ledit terme de régulation, « NR » représente la troisième vitesse de rotation, « d » représente une constante comprise entre 0,005 et 1,

On compare ensuite les valeurs de ce terme de régulation et d'un seuil de consigne NTL' prédéterminé de la première vitesse de rotation NTL de la turbine libre.

La régulation de la vitesse de la turbine libre NTL est alors réalisée à l'aide d'une première valeur de consigne égale soit au terme de régulation NRc soit au seuil de consigne NTL' en fonction de conditions prédéterminées.

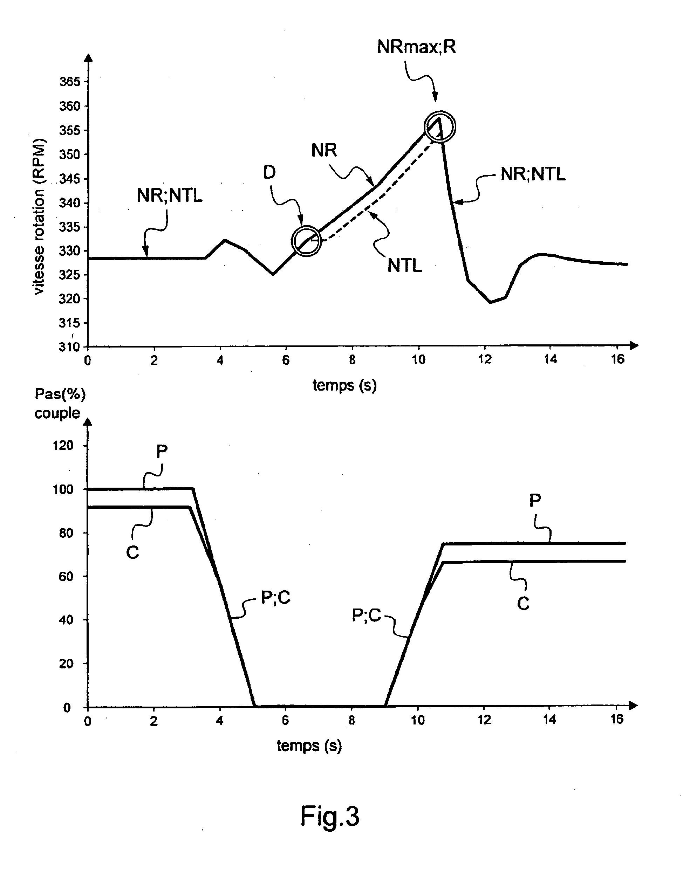

On obtient ainsi les courbes de vitesses de la figure 3.

A titre d'exemple, le procédé consiste à utiliser une constante d de préférence comprise entre 0,005 et 0.1 et plus préférentiellement égale à 0.01. La constante d est déterminée expérimentalement ou par calcul pour chaque aéronef.

Selon un premier mode de réalisation, on effectue la régulation de la vitesse de la turbine libre 3 sur la base d'une première valeur de consigne NTL* égale audit terme de régulation NRc lorsque ce terme de régulation NRc est supérieur audit seuil de consigne NTL', et l'on effectue la régulation de la vitesse de la turbine libre sur la base d'une première valeur de consigne NTL* égale audit seuil de consigne NTL' lorsque ce seuil de consigne NTL' est supérieur audit terme de régulation NRc.

Selon un deuxième mode de réalisation si la troisième vitesse de rotation NR est inférieure à la somme de la première vitesse de rotation NTL de turbine libre et d'un premier invariant $\underline{X1}$ prédéterminé, et si la dérivée par rapport au temps de la troisième vitesse de rotation NR est supérieure à un deuxième invariant $\underline{X2}$ alors on effectue la régulation de la vitesse de la turbine libre sur une première valeur de consigne NTL* égale audit terme de régulation NRc. A l'inverse, on effectue la régulation de la vitesse de la turbine libre sur la base d'une première valeur de consigne NTL* égale audit seuil de consigne NTL'.

Les premier et deuxièmes invariants sont déterminés par le constructeur par essais.

La régulation de la vitesse de la turbine libre s'effectue en suivant l'évolution de la troisième vitesse de rotation NR du rotor principal 6 et la resynchronisation s'effectue avec une vitesse de rotation NR plus élevée que pour une régulation connue dans l'art antérieur. Le moteur permet ainsi de contrer plus rapidement la décélération du rotor, la troisième vitesse de rotation atteignant par exemple seulement 320 tours par minute au lieu de 315 tours par minute.

La figure 3 est une illustration d'un exemple d'évolution de la troisième vitesse de rotation NR du rotor principal 6 et de la première vitesse de rotation NTL d'une turbine libre 6, selon le procédé conforme à l'invention, en fonction d'une modification du pas collectif P.

La figure 4 montre un agrandissement d'une partie des graphiques des figures 2 et 3.

Cette figure met clairement en évidence une différence d'angle mesurée entre les courbes de vitesses de rotation du rotor NR et de la turbine libre NTL entre les figures 2 et 3 au niveau du point de resynchronisation R.

L'angle α1 de la figure 2 est sensiblement plus grand que l'angle α2 de la figure 3, traduisant ainsi une différence d'accélération de nature à générer plus facilement un choc dans la roue libre 4. Ce phénomène est substantiellement diminué lorsque cette différence d'accélération est réduite, ce qui est le cas avec le procédé conforme à l'invention.

La figure 5 présente un dispositif 100 de régulation d'une source motrice 105 d'un aéronef à voilure tournante, cette source motrice 105 étant munie d'un générateur de gaz 1 et d'une turbine libre 3.

Le dispositif 100 de régulation comprend un calculateur 110 pourvu d'un processeur 111 et d'une mémoire 112 contenant des instructions. De plus, le dispositif 100 inclut un premier moyen de mesure 120 d'une première vitesse de rotation NTL courante de la turbine libre 3, un deuxième moyen de mesure 130 d'une deuxième vitesse de rotation NG courante du générateur de gaz 1, un organe de mesure 140 de la troisième vitesse de rotation NR d'un rotor principal de l'aéronef, ainsi qu'un capteur de position 150 d'une commande dudit pas collectif

Les instructions mémorisées dans la mémoire 112 permettent au processeur 111 de réaliser les opérations suivantes :

- le processeur 111 utilise la valeur mesurée de la première vitesse de rotation NTL pour faire tendre cette première vitesse de rotation NTL vers une première valeur de consigne NTL* en pilotant une deuxième vitesse de rotation NG du générateur de gaz par le biais d'une deuxième valeur consigne NG*,

- le processeur 111 détermine l'évolution du pas collectif des pales de la voilure tournante, et en fonction de ladite évolution, le processeur anticipe temporairement la demande en puissance de la voilure tournante en corrigeant la deuxième valeur de consigne NG*,

- le processeur 111 détermine la valeur courante de la troisième vitesse de rotation NR de la voilure tournante à l'aide de l'organe de mesure 140,

- le processeur 111 calcule un terme de régulation fonction de la troisième vitesse de rotation à l'aide de la relation :

$$NRc = NR * (1 - d)$$

où « NRc » représente ledit terme de régulation, « NR » représente ladite troisième vitesse de rotation, « d » représente une constante comprise entre 0 et 1,

- le processeur 111 compare les valeurs de ce terme de régulation et d'un seuil de consigne NTL' prédéterminé de la première vitesse de rotation NTL de la turbine libre, et

- le processeur 111 effectue la régulation de la première vitesse de rotation NTL de la turbine libre 3 en utilisant une première valeur de consigne NTL* égale soit audit terme de régulation NRC soit audit seuil de consigne NTL' en fonction de conditions prédéterminées.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

**1.** Procédé de régulation d'une source motrice (105) munie d'un générateur de gaz (1) et d'une turbine libre (3) d'un aéronef à voilure tournante (6) consistant à :

- utiliser une valeur mesurée de la première vitesse de rotation (NTL) de la turbine libre (3) pour faire tendre cette première vitesse de rotation (NTL) vers une première valeur de consigne (NTL*) en pilotant une deuxième vitesse de rotation (NG) dudit générateur de gaz (1) par le biais d'une deuxième valeur consigne (NG*),
- lire l'évolution du pas collectif des pales de la voilure tournante (6) et en fonction de ladite évolution, anticiper temporairement la demande en puissance de la voilure tournante (6) en corrigeant la deuxième valeur de consigne (NG*),

**caractérisé en ce que** ce procédé prévoit de :

- lire une valeur courante d'une troisième vitesse de rotation (NR) de la voilure tournante (6) pour calculer un terme de régulation (NRc) fonction de la troisième vitesse de rotation (NR) à l'aide de la relation :

$$NRc = NR * (1 - d)$$

où « NRc » représente ledit terme de régulation, « NR » représente ladite troisième vitesse de rotation, « d » représente une constante non nulle comprise entre 0,005 et 1,
- comparer les valeurs de ce terme de régulation et d'un seuil de consigne (NTL') prédéterminé,
- effectuer la régulation de la première vitesse de rotation (NTL) de la turbine libre (3) sur une première valeur de consigne (NTL*) égale soit audit terme de régulation (NRc) soit audit seuil de consigne (NTL') en fonction de conditions prédéterminées.

**2.** Procédé selon la revendication 1, **caractérisé en ce que** ce procédé prévoit d'utiliser une constante (d) comprise entre 0,005 et 0,1.

**3.** Procédé selon la revendication 2, **caractérisé en ce que** ce procédé prévoit d'utiliser une constante (d) égale à 0,01.

**4.** Procédé selon la revendication 1, **caractérisé en ce que** l'on effectue la régulation de la première vitesse de rotation (NTL) de la turbine libre (3) sur une première valeur de consigne (NTL*) égale audit terme de régulation lorsque ce terme de régulation est supérieur audit seuil de consigne, et l'on effectue la régulation de la première vitesse de rotation (NTL) sur une première valeur de consigne (NTL*) égale audit seuil de consigne lorsque ce seuil de consigne est supérieur audit terme de régulation.

**5.** Procédé selon l'une des revendications 1 à 3 **caractérisé en ce que** si la troisième vitesse de rotation (NR) est inférieure à la somme de la première vitesse de rotation (NTL) et d'un premier invariant prédéterminé, et si la dérivée par rapport au temps de la troisième vitesse de rotation (NR) est supérieure à un deuxième invariant alors on effectue la régulation de la première vitesse de rotation (NTL) sur une première valeur de consigne (NTL*) égale audit terme de régulation, ladite régulation étant dans les autres cas effectuée sur une première valeur de consigne (NTL*) égale au seuil de consigne.

**6.** Procédé selon l'une des revendications 1 à 5, **caractérisé en ce que** la deuxième valeur de consigne (NG*) est déterminée par l'intermédiaire d'une régulation proportionnelle intégrale.

**7.** Procédé selon l'une des revendications 1 à 6, **caractérisé en ce que** ce procédé prévoit d'utiliser un calculateur de la source motrice pour mettre en oeuvre ses étapes constitutives.

**8.** Procédé selon l'une des revendications 1 à 6, **caractérisé en ce que** ce procédé prévoit d'utiliser un calculateur (110) du système avionique de l'aéronef.

**9.** Procédé selon l'une des revendications 1 à 8, **caractérisé en ce que** ce procédé trouve son application sur un aéronef à voilure tournante (6), dont une source motrice (105) est reliée à la voilure tournante (6) via une boîte de transmission (5) de puissance principale (BTP) et un mécanisme à roue libre (4).

**10.** Dispositif (100) de régulation d'une source motrice (105) d'un aéronef à voilure tournante (6), cette source motrice (105) étant munie d'un générateur de gaz (1) et d'une turbine libre (3), ledit dispositif (100) comprenant un calculateur (110) pourvu d'un processeur (111) et d'une mémoire (112) contenant des instructions, ces instructions permettant au processeur (111) de réaliser les opérations suivantes :

- le processeur (111) utilise une valeur mesurée de la première vitesse de rotation (NTL) pour faire tendre cette première vitesse de rotation (NTL) vers une première valeur de consigne (NTL*) en pilotant une deuxième vitesse de rotation (NG) dudit générateur de gaz par le biais d'une deuxième valeur consigne (NG*),

- le processeur (111) détermine l'évolution du pas collectif des pales de la voilure tournante (6), et en fonction de ladite évolution, le processeur (110) anticipe temporairement la demande en puissance de la voilure tournante (6) en corrigeant la deuxième valeur de consigne (NG*).

**caractérisé en ce que** :

- le processeur (111) détermine la valeur courante de la troisième vitesse de rotation de la voilure tournante,

- le processeur (111) calcule un terme de régulation fonction de la troisième vitesse de rotation (NR) à l'aide de la relation :

$$NRc = NR * (1 - d)$$

où « NRc » représente ledit terme de régulation, « NR » représente ladite troisième vitesse de rotation, « d » représente une constante non nulle comprise entre 0,005 et 1,

- le processeur (111) compare les valeurs de ce terme de régulation et d'un seuil de consigne prédéterminée de la première vitesse de rotation de la turbine libre (3),

- le processeur (111) effectue la régulation de la première vitesse de rotation (NTL) de la turbine libre (3) sur une première valeur de consigne (NTL*) égale soit audit terme de régulation (NRc) soit audit seuil de consigne (NTL') en fonction de conditions prédéterminées.

**Patentansprüche**

**1.** Verfahren zum Regeln einer Antriebsquelle (105), die einen Gasgenerator (1) und eine Arbeitsturbine (3) eines Drehflügelluftfahrzeugs (6) aufweist, welches darin besteht:

- einen Messwert der ersten Drehgeschwindigkeit (NTL) der Arbeitsturbine (3) zu verwenden, um diese erste Drehgeschwindigkeit (NTL) einem ersten Sollwert (NTL*) anzunähern, indem eine zweite Drehgeschwindigkeit (NG) des Gasgenerators (1) durch einen zweiten Sollwert (NG*) geführt wird,

- die Entwicklung des kollektiven Pitches der Rotorblätter des Drehflügels (6) auszulesen, und in Abhängigkeit von dieser Entwicklung zeitweise die Leistungsanforderung des Drehflügels (6) vorwegzunehmen, indem der zweite Sollwert (NG*) korrigiert wird,

**dadurch gekennzeichnet, dass** das Verfahren vorsieht:

- Auslesen eines aktuellen Werts einer dritten Drehgeschwindigkeit (NR) des Drehflügels (6), um ein Regelungsglied (NRC), welches eine Funktion der dritten Drehgeschwindigkeit (NR) ist, mit Hilfe der Beziehung

$$NRc = NR * (1 - d)$$

zu berechnen,
wobei "NRc" das Regelungsglied darstellt, "NR" die dritte Drehgeschwindigkeit bedeutet, und "d" eine Konstante ungleich Null darstellt, die zwischen 0,005 und 1 liegt,
- Vergleichen des Werts dieses Regelungsglieds mit einem vorbestimmten Soll-Schwellenwert,
- Ausführen der Regelung der ersten Drehgeschwindigkeit (NTL) der Arbeitsturbine (3) auf einen ersten Sollwert (NTL*), der entweder gleich dem Regelungsglied (NRc) oder gleich der Sollschwelle (NTL') ist, in Abhängigkeit von vorbestimmten Bedingungen.

2. Verfahren nach Anspruch 1, **dadurch gekennzeichnet, dass** das Verfahren vorsieht, eine Konstante (d) zu verwenden, deren Wert zwischen 0,005 und 0,1 liegt.

3. Verfahren nach Anspruch 2, **dadurch gekennzeichnet, dass** das Verfahren vorsieht, eine Konstante (d) zu verwenden, die gleich 0,01 ist.

4. Verfahren nach Anspruch 1, **dadurch gekennzeichnet, dass** die Regelung der ersten Drehgeschwindigkeit (NTL) der Arbeitsturbine (3) auf einen ersten Sollwert (NTL*) durchgeführt wird, der gleich dem Regelungsglied ist, wenn dieses Regelungsglied größer als der Soll-Schwellenwert ist, und wobei die Regelung der ersten Drehgeschwindigkeit (NTL) auf einen ersten Sollwert (NTL*) ausgeführt wird, der gleich dem Soll-Schwellenwert ist, wenn dieser Soll-Schwellenwert größer ist als das Regelungsglied.

5. Verfahren nach einem der Ansprüche 1 bis 3, **dadurch gekennzeichnet, dass**, wenn die dritte Drehgeschwindigkeit (NR) kleiner ist als die Summe der ersten Drehgeschwindigkeit (NTL) und eines ersten vorbestimmten unveränderlichen Werts, und wenn die Ableitung über der Zeit der dritten Drehgeschwindigkeit (NR) größer ist als ein zweiter unveränderliche Wert, die Regelung der ersten Drehgeschwindigkeit (NTL) auf einen ersten Sollwert (NTL*), der gleich dem Regelungsglied ist, durchgeführt wird, wobei die Regelung in den anderen Fällen auf einen ersten Sollwert (NTL*), der gleich dem Soll-Schwellenwert ist, durchgeführt wird.

6. Verfahren nach einem der Ansprüche 1 bis 5, **dadurch gekennzeichnet, dass** der zweite Sollwert (NG*) über eine proportionale integrale Regelung bestimmt wird.

7. Verfahren nach einem der Ansprüche 1 bis 6, **dadurch gekennzeichnet, dass** das Verfahren vorsieht, einen Rechner der Antriebsquelle zu verwenden, um die Verfahrensschritte des Verfahrens durchzuführen.

8. Verfahren nach einem der Ansprüche 1 bis 6, **dadurch gekennzeichnet, dass** das Verfahren vorsieht, einen Rechner (110) des Luftfahrtelektroniksystems des Luftfahrzeugs zu verwenden.

9. Verfahren nach einem der Ansprüche 1 bis 8, **dadurch gekennzeichnet, dass** das Verfahren seine Anwendung findet bei einem Drehflügelluftfahrzeug (6), dessen Antriebsquelle (105) mit dem Drehflügel (6) über ein Hauptkraftübertragungsgetriebe (5) (BTP) und einen Freilaufmechanismus (4) verbunden ist.

10. Vorrichtung (100) zur Regelung einer Antriebsquelle (105) eines Drehflügelluftfahrzeugs (6), dessen Antriebsquelle (105) mit einem Gasgenerator (1) und einer Arbeitsturbine (3) versehen ist, wobei die Vorrichtung (100) einen Rechner (110) aufweist mit einem Prozessor (111) und einem Speicher (112), der die Befehle beinhaltet, wobei diese Befehle es dem Prozessor (111) ermöglichen, folgende Schritte durchzuführen:

- der Prozessor (111) verwendet einen Messwert der ersten Drehgeschwindigkeit (NTL), um diese erste Drehgeschwindigkeit (NTL) einem ersten Sollwert (NTL*) anzunähern, indem eine zweite Drehgeschwindigkeit (NG) des Gasgenerators über einen zweiten Sollwert (NG*) geführt wird,
- der Prozessor (111) bestimmt die Entwicklung des kollektiven Pitches der Rotorblätter des Drehflügels (6), und in Abhängigkeit von der Entwicklung nimmt der Prozessor (111) zeitweise die Leistungsanforderung des Drehflügels (6) vorweg, indem der zweite Sollwert (NG*) korrigiert wird,

**dadurch gekennzeichnet, dass**

- der Prozessor (111) den aktuellen Wert der dritten Drehgeschwindigkeit des Drehflügels bestimmt,
- der Prozessor (111) ein Regelungsglied, welches eine Funktion der dritten Drehgeschwindigkeit (NR) ist, mit Hilfe der Beziehung:

$$NRc = NR * (1 - d),$$

berechnet,
wobei "NRc" das Regelungsglied darstellt, "NR" die dritte Drehgeschwindigkeit bedeutet, und "d" eine Konstante ungleich Null darstellt, die zwischen 0,005 und 1 liegt,
- der Prozessor (111) den Wert des Regelungsglieds mit einem vorbestimmten Soll-Schwellenwert der ersten Drehgeschwindigkeit der Arbeitsturbine (3) vergleicht,
- der Prozessor (111) die Regelung der ersten Drehgeschwindigkeit (NTL) der Arbeitsturbine (3) auf einen ersten Sollwert (NTL*) ausführt, der entweder gleich dem Regelungsglied (NRc) oder gleich dem Soll-Schwellenwert (NTL*) in Abhängigkeit von vorbestimmten Bedingungen ist.

**Claims**

1. A method of regulating a motive source (105) equipped with a gas generator (1) and a free turbine (3) of an aircraft with a rotary wing (6), consisting of:

    - using a measured value of the first speed of rotation (NTL) of the free turbine (3) to cause this first speed of rotation (NTL) to tend towards a first setpoint value (NTL*) by controlling a second speed of rotation (NG) of said gas generator (1) by means of a second setpoint value (NG*),
    - reading the variation in the collective pitch of the blades of the rotary wing (6) and, as a function of said variation, temporarily anticipating the power demand of the rotary wing (6) by correcting the second setpoint value (NG*),

    **characterised in that** this method provides for:

    - reading a current value of a third speed of rotation (NR) of the rotary wing (6) in order to calculate a regulation term (NRc) which is a function of the third speed of rotation (NR) using the relationship:

$$NRc = NR * (1 - d)$$

    in which "NRc" represents said regulation term, "NR" represents said third speed of rotation, "d" represents a constant other than zero of between 0.005 and 1,
    - comparing the values of this regulation term and of a predetermined setpoint threshold (NTL'),
    - regulating the first speed of rotation (NTL) of the free turbine (3) on a first setpoint value (NTL*) equal either to said regulation term (NRc) or to said setpoint threshold (NTL') as a function of predetermined conditions.

2. A method according to Claim 1, **characterised in that** this method provides for using a constant (d) of between 0.005 and 0.1.

3. A method according to Claim 2, **characterised in that** this method provides for using a constant (d) equal to 0.01.

4. A method according to Claim 1, **characterised in that** the first speed of rotation (NTL) of the free turbine (3) is regulated on a first setpoint value (NTL*) equal to said regulation term when this regulation term is greater than said setpoint threshold, and the first speed of rotation (NTL) is regulated on a first setpoint value (NTL*) equal to said setpoint threshold when this setpoint threshold is greater than said regulation term.

5. A method according to one of Claims 1 to 3, **characterised in that** if the third speed of rotation (NR) is less than the sum of the first speed of rotation (NTL) and of a first predetermined invariant, and if the derivative relative to time of the third speed of rotation (NR) is greater than a second invariant, then the first speed of rotation (NTL) is regulated on a first setpoint value (NTL*) equal to said regulation term, said regulation in the other cases being carried out on a first setpoint value (NTL*) equal to the setpoint threshold.

6. A method according to one of Claims 1 to 5, **characterised in that** the second setpoint value (NG*) is determined by means of a proportional integral regulation.

7. A method according to one of Claims 1 to 6, **characterised in that** this method provides for using a computer of the motive source to implement its constituent steps.

8. A method according to one of Claims 1 to 6, **char-**

**acterised in that** this method provides for using a computer (110) of the avionics system of the aircraft.

9.  A method according to one of Claims 1 to 8, **characterised in that** this method is applied in an aircraft with a rotary wing (6), a motive source (105) of which is connected to the rotary wing (6) via a main power transmission gearbox (PTG) (5) and a freewheel mechanism (4).

10. A device (100) for regulating a motive source (105) of an aircraft with a rotary wing (6), this motive source (105) being provided with a gas generator (1) and a free turbine (3), said device (100) comprising a computer (110) provided with a processor (111) and a memory (112) containing instructions, these instructions enabling the processor (111) to carry out the following operations:

> - the processor (111) uses a measured value of the first speed of rotation (NTL) to cause this first speed of rotation (NTL) to tend towards a first setpoint value (NTL*) by controlling a second speed of rotation (NG) of said gas generator by means of a second setpoint value (NG*),
> - the processor (111) determines the variation in the collective pitch of the blades of the rotary wing (6) and, as a function of said variation, the processor (110) temporarily anticipates the power demand of the rotary wing (6) by correcting the second setpoint value (NG*),

> **characterised in that**:

> - the processor (111) determines the current value of the third speed of rotation of the rotary wing,
> - the processor (111) calculates a regulation term which is a function of the third speed of rotation (NR) using the relationship:

$$NRc = NR * (1 - d)$$

> in which "NRc" represents said regulation term, "NR" represents said third speed of rotation, "d" represents a constant other than zero of between 0.005 and 1,
> - the processor (111) compares the values of this regulation term and of a predetermined setpoint threshold of the first speed of rotation of the free turbine (3),
> - the processor (111) regulates the first speed of rotation (NTL) of the free turbine (3) on a first setpoint value (NTL*) equal either to said regulation term (NRc) or to said setpoint threshold (NTL') as a function of predetermined conditions.

Fig.1

105

1 2 3 4

5

6

Fig.4

NRmax
α2
NR
R
NTL
α1
R
NR;NTL
NTL
NTLa

vitesse rotation (RPM)

temps (s)

120
130
140
150

110
111
112

1 3

100

105

Fig.5

Fig.2

Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1101327
- EP 0093684 A
- US 5046923 A
- EP 0398839 A